# EUROPÄISCHE PATENTSCHRIFT

(11) **EP 0 571 833 B1**
(45) Veröffentlichungstag und Bekanntmachung des Hinweises auf die Patenterteilung: **16.04.1997**
(21) Anmeldenummer: 93107825.7
(22) Anmeldetag: 13.05.1993
(51) Int. Cl.: C08G 18/10, C08G 18/66, C08G 18/76, C08G 18/80

(54) **Thermoplastisch verarbeitbare Polyurethan-Elastomere und Verfahren zur Herstellung**
Thermoplastically processable polyurethanes and process for their production
Elastomères de polyuréthanes thermoplastiquement façonnables et leur procédé de préparation

(30) Priorität: 26.05.1992 DE 4217362
(43) Veröffentlichungstag der Anmeldung: 01.12.1993
(73) Patentinhaber: BAYER AG, 51368 Leverkusen (DE)
(72) Erfinder: Bräuer, Wolfgang, Dr., W-5090 Leverkusen 1 (DE); Müller, Friedemann, Dr., W-4040 Neuss (DE); Hoppe, Hans-Georg, Dipl.-Ing., W-5653 Leichlingen (DE); Wussow, Hans-Georg, Dr., W-4000 Düsseldorf 13 (DE)

(56) Entgegenhaltungen:
- EP-A- 0 280 981
- WO-A-90/11309
- DE-A- 2 523 987
- CHEMICAL ABSTRACTS, vol. 108, no. 10, 7. M rz 1988, Columbus, Ohio, US; abstract no. 76907v, & JP-A-62 158 712

## Beschreibung

Die Erfindung betrifft thermoplastisch verarbeitbare Polyurethan-Elastomere mit verbessertem Verarbeitungsverhalten und ein Verfahren zur Herstellung durch Bildung von Hartsegmentprepolymeren.

Thermoplastische Polyurethan-Elastomere (TPU) sind seit langem bekannt. Sie sind von technischer Bedeutung aufgrund der Kombination hochwertiger mechanischer Eigenschaften mit den bekannten Vorteilen der kostengünstigen thermoplastischen Verarbeitbarkeit. Durch die Verwendung unterschiedlicher chemischer Aufbaukomponenten läßt sich eine große Variationsbreite mechanischer Eigenschaften erzielen. Eine Übersicht über TPU, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben.

TPU's werden aus linearen Polyolen, meist Polyester oder Polyether, organischen Diisocyanaten und kurzkettigen Diolen (Kettenverlängerer) aufgebaut. Sie können kontinuierlich oder diskontinuierlich hergestellt werden. Als die bekanntesten Herstellverfahren werden das sogenannte Bandverfahren und das Extruderverfahren auch technisch genutzt.

Zur Einstellung der Eigenschaften können die Aufbaukomponenten in relativ breiten molaren Verhältnissen variiert werden. Bewährt haben sich molare Verhältnisse von Makrodiolen zu Kettenverlängerern von 1:1 bis 1:12. Hierdurch ergeben sich Produkte im Bereich von 70 Shore A bis 75 Shore D.

Zur Verbesserung des Verarbeitungsverhaltens ist bei Spritzgußartikeln eine schnellere Entformbarkeit und bei Extrusionsprodukten eine erhöhte Standfestigkeit von großem Interesse. Von ausschlaggebender Bedeutung für das Entformungsverhalten und die Standfestigkeit der TPU's ist deren Morphologie, d.h. das spezielle Rekristallisationsverhalten.

Die für ein verbessertes Verarbeitungsverhalten geeignete Morphologie wird bei Produkten, die nach üblichen Verfahren hergestellt werden, erst bei hohen Hartsegmentanteilen (System kurzkettiges Diol + Diisocyanat) erreicht. Nachteilig ist, daß dadurch die Beweglichkeit des Weichsegments (System Polyol + Diisocyanat) eingeschränkt ist, so daß die Kälteflexibilität und das Fließverhalten verschlechtert werden. Außerdem erhöht man ja gleichzeitig den Härtegrad.

Die Veränderung der Morphologie durch Erhöhung des Molgewichtes des Polyols führt zu einer stärkeren Phasenentmischung und verbesserten mechanischen Werten, aber durch die gleichzeitige Herabsetzung des Hartsegmentanteils zu einer deutlichen Verminderung der Härte (Seefried u.a., J. Appl. Pol. Sci. 19, 2493, 1975). Von einem verbesserten Rekristallisationsvermögen wird deshalb nicht berichtet.

Eine graduelle Morhologiebeeinflussung bei konstanter Rezeptur tritt auch bei Änderung der Dosierreihenfolge der Aufbaukomponenten ein. In der Vergangenheit wurde vor allem der Weg des Weichsegmentprepolymers beschritten. In der häufigsten Variante wird dabei das Polyol mit der gesamten Menge Diisocyanat umgesetzt. Die Kettenverlängerung mit dem niedermolekularen Diol erfolgt in einer zweiten Stufe. Hauptgrund ist der Ausgleich der Reaktivitäten von Polyol und Kettenverlängerer. Zuerst wird die PU-Reaktion mit dem weniger reaktiven Polyol ausgeführt, danach die Reaktion mit dem aktiveren kurzkettigen Diol. Aufgrund des hohen Überschusses von Diisocyanat in der Prepolymerstufe wird eine Verlängerung der Polyole nur im untergeordneten Umfang festgestellt. Morphologisch erfolgt eine stärkere Phasenentmischung, die zu einer Anhebung der mechanischen Eigenschaften führt (Wilkes u.a., J. Appl. Pol. Sci. 29, 2695, 1984). Das Rekristallisationsvermögen ist jedoch nicht oder nur unwesentlich verbessert.

Ein anderes Weichsegment-Prepolymerverfahren wird von Meisert u.a. beschrieben (DE 2 248 382). Durch ein Polyol-Prepolymer im NCO-Unterschuß wird ein OH-terminiertes Prepolymer erzeugt, das im Folgeschritt mit dem Kettenverlängerer und mit einem vom 1. Schritt verschiedenen Diisocyanat umgesetzt wird. Die Erfinder erreichen damit eine Verbreiterung des Aufschmelzbereiches und in der Folge homogenere Folien als bei der üblichen Einschrittreaktion. Eine Verbesserung des Rekristallisationsvermögens wurde auch bei diesen Beispielen nicht beobachtet.

Die oben beschriebene Aufgabe der Verbesserung des Entformungsverhaltens und der Standfestigkeit von TPU's durch eine Steigerung des Rekristallisationsvermögens bei weitgehend gleichbleibendem Härtebereich und Kälteverhalten ist also bisher nicht befriedigend gelöst.

Überraschenderweise wurde ein TPU mit verbesserten arbeitungsverhalten gefunden, dadurch gekennzeichnet, daß man in einer mehrstufigen Umsetzung
A) eine überschüssige Menge Diisocyanat der allgemeinen Formel OCN-Z-NCO, wobei Z ein zweiwertiges organisches Radikal ist, mit einem kleineren Anteil der Gesamtmenge von niedermolekularen Diol-Kettenverlängerern mit Molekulargewichten von 62 bis 500, in einem NCO/OH-Verhältnis von 3:1 bis 20:1, zum Hartsegmentprepolymeren umsetzt,
B) das in Stufe A) hergestellte NCO-Prepolymer mit den im wesentlichen linearen Polyolen mit Molekulargewichten von 500 bis 5000, dem Hauptteil der Gesamtmenge von niedermolekularen Diol- und gegebenenfalls Triol- und/oder Diamin-Kettenverlängerern mit Molekulargewichten von 62 bis 500, und der möglichen Restmenge an obigen Diisocyanaten, wobei insgesamt unter Hinzuziehung sämtlicher Reaktionskomponenten der Stufen A) und B) ein NCO/aktives H-Verhältnis von 0,9:1 bis 1,2:1 eingestellt wird,
zum Polyurethan umsetzt.

Bevorzugte Polyole sind Polyester, Polyether, Polycarbonate oder ein Gemisch aus diesen.

Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyldiethanolamine, beispielsweise N-Methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans.

Die im wesentlichen linearen Polyetherole besitzen vorzugsweise Molekulargewichte von 500 bis 5000. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernsteinsäure-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischung untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise merisationsprodukte von Lactonen, beispielsweise gegebenenfalls substituierten ω-Caprolactonen.

Als Polyesterole vorzugsweise verwendet werden Ethandiol-polyadipate, 1,4-Butandiol-polyadipate, Ethandiol-butandiol-1,4-polyadipate, 1,6-Hexandiol-neopentylglykol-polyadipate, 1,6-Hexandiol-1,4-butandiol-polyadipate und Polycaprolactone.

Die Polyesterole besitzen Molekulargewichte von 500 bis 5000.

Als organische Diisocyanate kommen beispielsweise aliphatische, cycloaliphatische, araliphatische, heterocyclische und aromatische Diisocyanate in Betracht. Im einzelnen seien beispielhaft genannt: aliphatische Diisocyanate, wie Hexamethylendiisocyanat, cycloaliphatische Diisocyanate, wie Isophorondiisocyanat, 1,4-Cyclohexandiisocyanat, 1-Methyl-2,4- und -2,6-cyclohexandiisocyanat sowie die entsprechenden Isomerengemische 4,4'-, 2,4'- und 2,2'-Dicyclohexylmethandiisocyanat sowie die entsprechenden Isomerengemische und vorzugsweise aromatische Diisocyanate, wie 2,4-Toluylendiisocyanat, Gemische aus 2,4-und 2,6-Toluylendiisocyanat, 4,4'-, 2,4'- und 2,2'-Diphenylmethandiisocyanat, Gemische aus 2,4'- und 4,4'-Diphenylmethandiisocyanat, urethanmodifizierte flüssige 4,4'- und/oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, Dicyclohexylmethandiisocyanat, Isophorondiisocyanat, Diphenylmethandiisocyanat-Isomerengemische mit einem 4,4'-Diphenylmethandiisocyanatgehalt von größer als 96 Gew.-% und insbesondere 4,4'-Diphenylmethandiisocyanat und 1,5-Naphthylendiisocyanat.

Die genannten Diisocyanate können zusammen mit bis zu 15 % (berechnet auf Diisocyanat), aber höchstens soviel eines Polyisocyanates, daß ein thermoplastisch verarbeitbares Produkt entsteht, verwendet werden. Beispiele sind Triphenylmethan-4,4', 4''-triisocyanat und Polyphenyl-polymethylen-polyisocyanate.

Als Kettenverlängerungsmittel mit den Molekulargewichten von 62 bis 500 kommen vorzugsweise aliphatische Diole mit 2 bis 14 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4-Di-(β-hydroxyethyl)-hydrochinon, (cyclo)aliphatische Diamine, wie z.B. Isophoron-diamin, Ethylendiamin, 1,2-, 1,3-Propylen-diamin, N-Methyl-propylendiamin-1,3, N,N'-Dimethyl-ethylen-diamin und aromatische Diamine, wie z.B. 2,4- und 2,6-Toluylen-diamin, 3,5-Diethyl-2,4- und/oder -2,6-toluylen-diamin und primäre ortho-di-, tri- und/oder tetra-alkylsubstituierte 4,4'-Diaminodiphenylmethane.

Die Diol-Kettenverlängerer können zusammen mit bis zu 15 % (berechnet auf Kettenverlängerer) aber höchstens soviel eines Triols mit einem Molekulargewicht von bis zu 500, daß ein thermoplastisch verarbeitbares Produkt entsteht, verwendet werden. Beispiele sind Glycerin, Trimethylolpropan und deren niedermolekularen Alkylenoxidaddukte.

Zur Herstellung der TPU können die Aufbaukomponenten, gegebenenfalls in Gegenwart von Katalysatoren, Hilfsmitteln und/oder Zusatzstoffen in solchen Mengen zur Reaktion gebracht werden, daß das Äquivalenzverhältnis von NCO-Gruppen zur Summe der NCO-reaktiven Gruppen, insbesondere der OH-Gruppen der Aufbaukomponenten 0,9:1 bis 1,20:1, vorzugsweise 0,95:1 bis 1,10:1 beträgt.

Geeignete Katalysatoren, welche insbesondere die Reaktion zwischen den NCO-Gruppen der Diisocyanate und den Hydroxylgruppen der Aufbaukomponenten beschleunigen, sind die nach dem Stand der Technik bekannten und üblichen tertiären Amine, wie z.B. Triethylamin, cyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0005 bis 0,1 Teilen pro 100 Teilen Polyhydroxyverbindung eingesetzt.

Neben Katalysatoren können den Aufbaukomponenten auch Hilfsmittel und/oder Zusatzstoffe einverleibt werden. Genannt seien beispielsweise Gleitmittel, Inhibitoren, Stabilisatoren gegen Hydrolyse, Licht, Hitze und Verfärbung, Flammschutzmittel, Farbstoffe, Pigmente, ganische und/oder organische Füllstoffe und Verstärkungsmittel.

Verstärkungsmittel sind insbesondere faserartige Verstärkungsstoffe wie z.B. anorganische Fasern, die nach dem Stand der Technik hergestellt werden und auch mit einer Schlichte beaufschlagt sein können.

Nähere Angaben über die obengenannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 oder der DE-A 29 01 774 zu entnehmen.

Die Mengen an Reaktionskomponenten zur Prepolymerbildung (Stufe A) werden erfindungsgemäß so gewählt, daß das NCO/OH-Verhältnis von Diisocyanat und Diol-Kettenverlängerer 3:1 bis 20:1, bevorzugt 5:1 bis 15:1 beträgt.

Im Prepolymer wird nur eine Teilmenge von Diol-Kettenverlängerern der Gesamtmenge der Diol- und gegebenenfalls Triol-Kettenverlängerer eingesetzt, bevorzugt 0,5 bis 30 Mol-%. Die Komponenten werden innig vermischt. Die Prepolymerreaktion (Stufe A) sollte im wesentlichen zum vollständigen Umsatz gebracht werden. Die Reaktionstemperaturen liegen oberhalb der Schmelzbereiche der Ausgangskomponenten, bevorzugt zwischen 50° und 160°C.

In der Stufe B wird das in Stufe A hergestellte Prepolymer gleichzeitig oder in beliebiger Reihenfolge mit der gegebenenfalls möglichen Restmenge Diisocyanat, den Polyolen und der Restmenge von niedermolekularen Diol- und gegebenenfalls Triol-Kettenverlängerern vermischt und zur Reaktion gebracht. Bevorzugt wird das Polyol vorgelegt. Die Reaktionstemperatur liegt oberhalb der Schmelztemperatur des Prepolymers und ist größer 130°C. Das Prepolymer kann direkt nach seiner Herstellung oder nach einer Zwischenlagerzeit von bis zu 4 Wochen, abhängig von der Lagertemperatur und der Luftfeuchtigkeit, in der Stufe B eingesetzt werden.

In einer besonderen Ausführungsform kann die Hartsegment-Prepolymerbildung der Stufe A und eine Weichsegment-Prepolymerbildung in einem Schritt erfolgen. Dazu werden das Diisocyanat, die Teilmenge des Diol-Kettenverlängerers und das im wesentlichen lineare Polyol miteinander umgesetzt. Nach erfolgter Reaktion bis zum im wesentlichen vollständigen Umsatz werden die Restmenge des Kettenverlängerers und gegebenenfalls die Restmenge des Diisocyanats nachdosiert und bei Temperaturen oberhalb von 80°C zur Reaktion gebracht.

Zur Herstellung von TPU's eignen sich die bekannten Mischaggregate, vorzugsweise die, die mit hoher Scherenergie arbeiten. Für die kontinuierliche Herstellung seien beispielhaft genannt Cokneter, vorzugsweise Extruder, wie z.B. Zweiwellenextruder, und Busskneter, sowie das Mischkopf/Band-Verfahren.

Das erfindungsgemäße TPU kann z.B. auf einem Zweiwellenextruder dadurch hergestellt werden, daß man das Prepolymer im ersten Teil des Extruders herstellt und die Polyolzugabe und die Kettenverlängerung im zweiten Teil anschließt. Alternativ können die Aufbaukomponenten des Prepolymers außerhalb des Extruders in einem Mischkopf oder Düse gemischt, die Prepolymer-Reaktion dann im ersten Teil und die obengenannten anschließenden Schritte im zweiten Teil des Extruders durchgeführt werden. Weiterhin kann auch der gesamte Prepolymerschritt vor dem Extruder liegen. Das fertige Prepolymer wird dann mit dem Polyol und dem Restkettenverlängerer in den Extruder dosiert.

Das erfindungsgemäße thermoplastisch verarbeitbare Polyurethan kann als Spritzgußartikel, Folienextrudat, Faser und Beschichtungsmasse verwendet werden. Bei Spritzgußanwendungen zeichnet es sich durch eine stark verbesserte Entformbarkeit aus, was dem Spritzgußverarbeiter eine verkürzte Taktzeit ermöglicht. Bei Extrusionsprodukten, wie z.B. Folien, resultiert aus dem erfindungsgemäß hergestellten TPU eine verbesserte Standfestigkeit.

In den folgenden Beispielen werden als Maß für die oben beschriebene erfindungsgemäße Morphologieveränderung die Ergebnisse von DSC-Messungen (differential scanning calorimetry) angegeben. Dabei korrelieren die Kristallisationstemperatur TC mit dem Rekristallisationsvermögen, die Schmelzpunkte TM mit der Kristallitgröße und die Schmelz- bzw. Rekristallisationsenthalpie HM bzw. HC mit der Kristallitmenge (C.S. Schollenberger, Abstr. Pap. Am. Chem. Soc. 1979, 83; J. Foks u.a., Eur. Pol. J. 25, 31).

Das Produkt wird im Stickstoff-Medium von -70°C bis 260°C mit 20°/min aufgeheizt, danach mit 40°/min auf -70°C abgekühlt. Nach 1 min bei -70°C wird erneut mit 20°/min auf 260°C erhitzt. In den Aufheizphasen stellen die endothermen Peaks die Schmelzbereiche dar, in er Abkühlphase der exotherme Peak die Kristallisation.

Die Messungen wurden an einem DSC-7 der Firma Perkin Elmer durchgeführt.

### Beispiele

In den Tabellen 1 und 2 wird die Erfindung anhand einiger Beispiele verdeutlicht. Die verwendeten Herstellverfahren sind nachstehend beschrieben.
*) nicht erfindungsgemäßes Vergleichsbeispiel

### Verfahren 1: one shot*

In einem Reaktionsgefäß werden gemäß Tabelle 1 ein Polyester aus Adipinsäure und Butandiol (Molgew. ca. 2250) und der Kettenverlängerer Butandiol bei 140°C vorgelegt.

Man gibt unter Rühren 60°C warmes 4,4'-Diphenylmethandiisocyanat (MDI) hinzu. Nach 30 Sekunden gießt man die Reaktionsmischung auf ein beschichtetes Blech und tempert 30 Minuten bei 120°C nach.

### Verfahren 2: Weichsegment-Prepolymer*

Analog Verfahren 1 wird der Polyester zuerst mit 4,4'-Diphenylmethandiisocyanat zwei Minuten umgesetzt, danach erfolgt die Butandiol-Zugabe. Nach 30 Sekunden wird die Reaktionsmischung wie in 1 beschrieben auf ein Blech gegossen und getempert.

### Verfahren 3: Hartsegment-Prepolymer

- Stufe 1:: Die Teilmenge 1 des 4,4'-Diphenylmethandiisocyanates wird bei ca. 60 bis 70°C mit der Teilmenge 1 des Butandiols unter Rühren umgesetzt. Nach zwei Minuten wird die Mischung auf ein Blech gegossen.
- Stufe 2:: Der oben erwähnte Polyester wird bei einer Starttemperatur von 140°C mit der Teilmenge 2 des Butandiols und gegebenenfalls der Teilmenge 2 des 4,4'-Diphenylmethandisocyanates (60°C) unter Rühren umgesetzt. Reihenfolge der Zugabe:
Verfahren 3.1:
   1. Polyester, 2. Butandiol, 3. 4,4'-Diphenylmethandiisocyanat und Hartsegmentprepolymer
Verfahren 3.2:
   1. Polyester, 2. Hartsegmentprepolymer,
   3. Butandiol
   Die Reaktionsmischung wird auf ein Blech gegossen und wie oben beschrieben getempert.
Verfahren 3.3:
   Stufe 1: Die Teilmenge 1 des 4,4'-Diphenylmethandiisocyanates, die Teilmenge 1 des Butandiols und der Polyester werden bei ca. 100°C unter Rühren umgesetzt.
   Stufe 2: Nach 10 Minuten wird die Teilmenge 2 des Butandiols und gegebenenfalls die Teilmenge 2 des 4,4'-Diphenylmethandiisocyanates unter Rühren zudosiert. Die Reaktionsmischung wird auf ein Blech gegossen und wie oben beschrieben getempert.

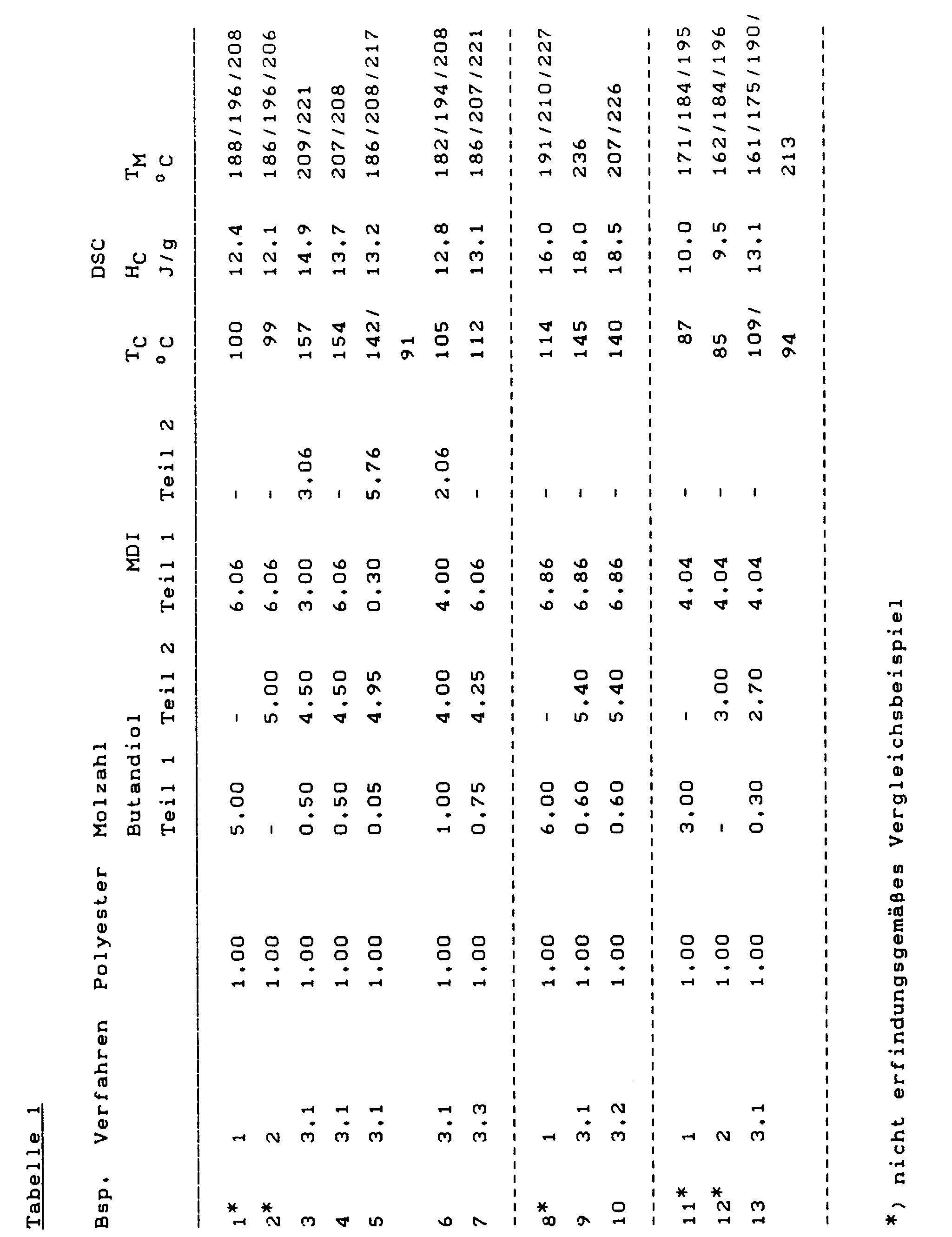

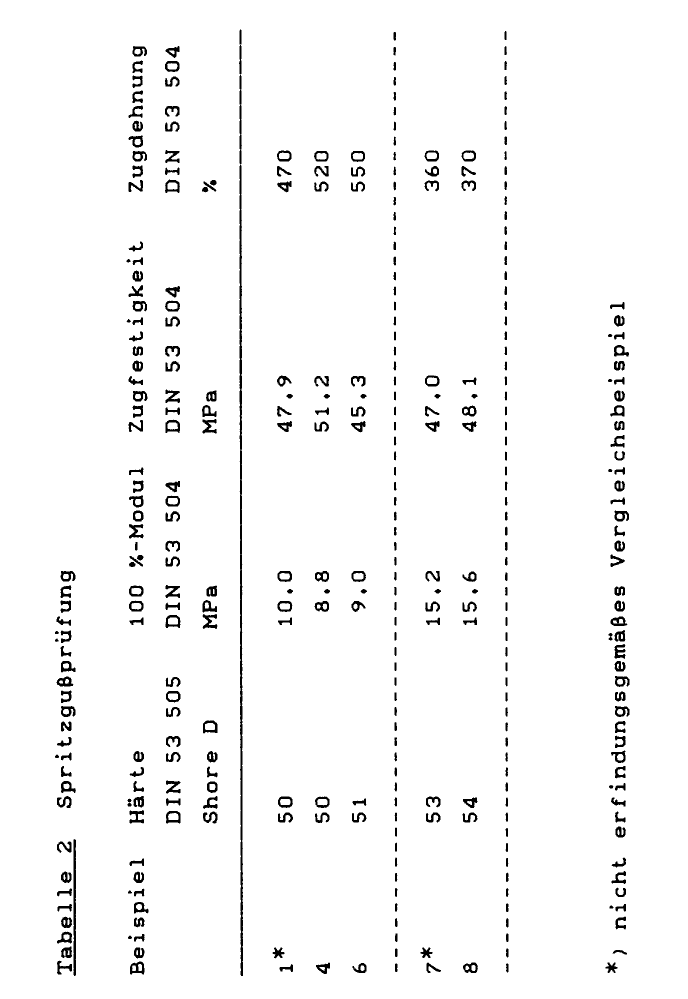

Man erkennt in den angegebenen Beispielen den deutlichen Anstieg der Kristallisationstemperatur T_{C} durch die Verwendung des erfindungsgemäßen Hartsegment-Prepolymerverfahrens. Dadurch ist das Entformungsverhalten und die Standfestigkeit z.B. von Extrusionsschläuchen dieser durch das erfindungsgemäße Verfahren hergestellten Produkte wesentlich verbessert. Die anderen wichtigen Produkteigenschaften bleiben weitgehend gleich.

## Patentansprüche

1. Thermoplastisch verarbeitbares Polyurethanelastomer mit verbessertem Verarbeitungsverhalten, dadurch gekennzeichnet, daß man in einer mehrstufigen Umsetzung
A) eine überschüssige Menge Diisocyanat der allgemeinen Formel OCN-Z-NCO, wobei Z ein zweiwertiges organisches Radikal ist, mit einem kleineren Anteil der Gesamtmenge von niedermolekularen Diol-Kettenverlängerern mit Molekulargewichten von 62 bis 500, in einem NCO/OH-Verhältnis von 3:1 bis 20:1, zum Hartsegmentprepolymeren umsetzt,
B) das in Stufe A) hergestellte NCO-Prepolymer mit den im wesentlichen linearen Polyolen mit Molekulargewichten von 500 bis 5000, dem Hauptteil der Gesamtmenge von niedermolekularen Diol- und gegebenenfalls Triol- und/oder Diamin-Kettenverlängerern mit kulargewichten von 62 bis 500, und der möglichen Restmenge an obigen Diisocyanaten, wobei insgesamt unter Hinzuziehung sämtlicher Reaktionskomponenten der Stufen A) und B) ein NCO/aktives H-Verhältnis von 0,9:1 bis 1,2:1 eingestellt wird,
zum Polyurethan umsetzt.

2. Ein thermoplastisch verarbeitbares Polyurethanelastomer gemäß Anspruch 1, dadurch gekennzeichnet, daß die Stufe A und die Zugabe des im wesentlichen linearen Polyols in einem Schritt durchgeführt werden.

3. Ein thermoplastisch verarbeitbares Polyurethanelastomer gemäß Anspruch 1 und 2, dadurch gekennzeichnet, daß das im wesentlichen lineare Polyol Polyester, Polyether, Polycarbonat oder ein Gemisch aus diesen mit einem mittleren Molekulargewicht von 500 bis 5000 ist.

4. Ein thermoplastisch verarbeitbares Polyurethanelastomer gemäß Anspruch 3, dadurch gekennzeichnet, daß der niedermolekulare Diol-Kettenverlängerer Ethylenglykol, Butandiol, Hexandiol, 1,4-Di-(β-hydroxyethyl)-hydrochinon ist.

5. Ein thermoplastisch verarbeitbares Polyurethanelastomer gemäß Anspruch 4, dadurch gekennzeichnet, daß das NCO-Prepolymer in einem NCO/OH-Verhältnis von 5:1 bis 15:1 hergestellt wird.

6. Ein thermoplastisch verarbeitbares Polyurethanelastomer gemäß Anspruch 5, dadurch gekennzeichnet, daß das NCO-Prepolymer mit einem Anteil von 0,5 bis 30 Mol-% der Gesamtmenge von niedermolekularen Diolen hergestellt wird.

7. Ein thermoplastisch verarbeitbares Polyurethanelastomer gemäß Anspruch 6, dadurch gekennzeichnet, daß das Diisocyanat ein Diphenylmethandiisocyanat-Isomerengemisch mit einem 4,4'-Diphenylmethandiisocyanatgehalt von größer 96 Gew.-% und insbesondere 4,4'-Diphenylmethandiisocyanat ist.

8. Verfahren zur Herstellung von thermoplastisch verarbeitbaren Polyurethanelastomeren gemäß einem der Ansprüche 1 bis 7, dadurch gekennzeichnet, daß man
A) eine überschüssige Menge Diisocyanat der allgemeinen Formel OCN-Z-NCO, wobei Z ein zweiwertiges organisches Radikal ist, mit einem kleineren Anteil der Gesamtmenge von niedermolekularen Diol-Kettenverlängerern mit Molekulargewichten von 62 bis 500, in einem NCO/OH-Verhältnis von 3:1 bis 20:1, zum Hartsegmentprepolymeren umsetzt, darauf
B) das in Stufe A) hergestellte NCO-Prepolymer mit den im wesentlichen linearen Polyolen mit Molekulargewichten von 500 bis 5000, dem Hauptteil der Gesamtmenge von niedermolekularen Diol- und gegebenenfalls Triol- und/oder Diamin-Kettenverlängerern mit kulargewichten von 62 bis 500, und der möglichen Restmenge an obigen Diisocyanaten, wobei insgesamt unter Hinzuziehung sämtlicher Reaktionskomponenten der Stufen A) und B) ein NCO/aktives H-Verhältnis von 0,9:1 bis 1,2:1 eingestellt wird,
zum Polyurethan umsetzt.

9. Verfahren gemäß Anspruch 8, dadurch gekennzeichnet, daß die Stufe A) und die Zugabe des im wesentlichen linearen Polyols in einem Schritt durchgeführt werden.

## Claims

1. Thermoplastically processable polyurethane elastomer having improved processability properties,
characterised in that in a multi-stage reaction
A) an excess of diisocyanate of the general formula OCN-Z-NCO, wherein Z is a bivalent organic radical, is reacted with a minor proportion of the total quantity of low molecular weight diol chain extenders having molecular weights of from 62 to 500, in a ratio of NCO : OH of from 3 : 1 to 20 : 1, to form hard segment prepolymer,
B) the NCO prepolymer prepared in stage A) is reacted with the substantially linear polyols having molecular weights of from 500 to 5000, the major proportion of the total quantity of low molecular weight diol chain extenders and optionally triol chain extenders and/or diamine chain extenders having molecular weights of from 62 to 500, and any residue of the above diisocyanates, wherein overall a ratio of NCO : active H of from 0.9 : 1 to 1.2 : 1 is adjusted, including all reaction components of stages A) and B),
to form polyurethane.

2. A thermoplastically processable polyurethane elastomer according to Claim 1, characterised in that stage A and the addition of the substantially linear polyol are conducted in one step.

3. A thermoplastically processable polyurethane elastomer according to Claims 1 and 2, characterised in that the substantially linear polyol is polyester, polyether, polycarbonate or a mixture thereof having an average molecular weight of from 500 to 5000.

4. A thermoplastically processable polyurethane elastomer according to Claim 3, characterised in that the low molecular weight diol chain extender is ethylene glycol, butanediol, hexanediol, 1,4-di-(β-hydroxyethyl) hydroquinone.

5. A thermoplastically processable polyurethane elastomer according to Claim 4, characterised in that the NCO prepolymer is prepared in a ratio of NCO : OH of from 5 : 1 to 15 : 1.

6. A thermoplastically processable polyurethane elastomer according to Claim 5, characterised in that the NCO prepolymer is prepared with a proportion of from 0.5 to 30 mol.% of the total quantity of low molecular weight diols.

7. A thermoplastically processable polyurethane elastomer according to Claim 6, characterised in that the diisocyanate is a diphenylmethane diisocyanate isomer mixture having a 4,4'-diphenylmethane diisocyanate content greater than 96 wt.%, and is in particular 4,4'-diphenylmethane diisocyanate.

8. Process for the preparation of thermoplastically processable polyurethane elastomers according to one of Claims 1 to 7, characterised in that
A) an excess of diisocyanate of the general formula OCN-Z-NCO, wherein Z is a bivalent organic radical, is reacted with a minor proportion of the total quantity of low molecular weight diol chain extenders having molecular weights of from 62 to 500, in a ratio of NCO : OH of from 3 : 1 to 20 : 1, to form hard segment prepolymer,
B) the NCO prepolymer prepared in stage A) is reacted with the substantially linear polyols having molecular weights of from 500 to 5000, the major proportion of the total quantity of low molecular weight diol chain extenders and optionally triol chain extenders and/or diamine chain extenders having molecular weights of from 62 to 500, and any residue of the above diisocyanates, wherein overall a ratio of NCO : active H of from 0.9 : 1 to 1.2 : 1 is adjusted, including all reaction components of stages A) and B),
to form polyurethane.

9. Process according to Claim 8, characterised in that stage A) and the addition of the substantially linear polyol are conducted in one step.

## Revendications

1. Elastomères de polyuréthanes aptes au travail thermoplastique et possédant un comportement amélioré au façonnage, caractérisés en ce que, dans une conversion en plusieurs stades opératoires
A) on fait réagir un excès d'un diisocyanate de formule générale OCN-Z-NCO dans laquelle Z représente un radical organique divalent avec une petite proportion de la quantité totale des diols à bas poids moléculaire, agents d'allongement des chaînes, de poids moléculaire 62 à 500, à un rapport NCO/OH, de 3 : 1 à 20 : 1, ce qui donne un prépolymère à segments durs,
B) on fait réagir le prépolymère à groupes NCO préparé au stade A) avec les polyols essentiellement linéaires de poids moléculaire 500 à 5 000, la plus grande partie de la quantité totale des diols - et le cas échéant triols - et/ou des diamines à bas poids moléculaire, agents d'allongement des chaînes, de poids moléculaire 62 à 500, et le reste éventuel du diisocyanate utilisé ci-dessus, avec un rapport NCO/H actif de 0,9 : 1 à 1 : 2 : 1 en égard à tous les composants de réaction des stades A) et B),
ce qui donne le polyuréthane recherché.

2. Un élastomère de polyuréthane apte au travail thermoplastique selon revendication 1, caractérisé en ce que le stade A et l'addition du polyol essentiellement linéaire sont réalisés en un seul stade.

3. Un élastomère de polyuréthane apte au travail thermoplastique selon revendications 1 et 2, caractérisé en ce que le polyol essentiellement linéaire consiste en un polyester, un polyéther, un polycarbonate ou un mélange de tels composants, à un poids moléculaire moyen de 500 à 5 000.

4. Un élastomère de polyuréthane apte au travail thermoplastique selon revendication 3, caractérisé en ce que les diols à bas poids moléculaire agents d'allongement des chaînes consistent en l'éthylèneglycol, le butanediol, l'hexanediol, la 1,4-di-(β-hydroxyéthyl)-hydroquinone.

5. Un élastomère de polyuréthane apte au travail thermoplastique selon revendication 4, caractérisé en ce que le prépolymère à groupe NCO est préparé à un rapport NCO/OH de 5 : 1 à 15 : 1.

6. Un élastomère de polyuréthane apte au travail thermoplastique selon revendication 5, caractérisé en ce que le prépolymère à groupe NCO est préparé avec une fraction de 0,5 à 30 mol% de la quantité totale des diols à bas poids moléculaire.

7. Un élastomère de polyuréthane apte au travail thermoplastique selon revendication 6, caractérisé en ce que le diisocyanate consiste en un mélange d'isomères du diphénylméthanediisocyanate à une teneur en 4,4'-diphénylméthanediisocyanate supérieure à 96 % en poids ou plus spécialement en le 4,4'-diphénylméthanediisocyanate.

8. Procédé de préparation d'un élastomère de polyuréthane apte au travail thermoplastique selon l'une des revendications 1 à 7, caractérisé en ce que
A) on fait réagir un excès d'un diisocyanate de formule générale OCN-Z-NCO dans laquelle Z représente un radical organique divalent, avec une petite fraction de la quantité totale des diols à bas poids moléculaire agents d'allongement des chaînes, de poids moléculaire 62 à 500, à un rapport NCO/OH de 3 : 1 à 20 : 1, ce qui donne un prépolymère à segments durs, puis
B) on fait réagir le prépolymère à groupes NCO préparés au stade A avec les polyols essentiellement linéaires de poids moléculaire 500 à 5 000, la plus grande partie de la quantité totale des diols - et le cas échéant triols - et/ou diamines à bas poids moléculaire, agents d'allongement des chaînes, de poids moléculaire 62 à 500, et le reste éventuel du diisocyanate ci-dessus, en réglant à un rapport NCO/H actif de 0,9 : 1 à 1,2 : 1 en égard à tous les composants de réaction des stades A) et B),
ce qui donne le polyuréthane recherché.

9. Procédé selon revendication 8, caractérisé en ce que le stade opératoire A) et l'addition du polyol essentiellement linéaire sont réalisés en une seule opération.
